# EUROPEAN PATENT SPECIFICATION

(11) **EP 3 519 370 B1**
(45) Date of publication and mention of the grant of the patent: **03.11.2021**
(21) Application number: 17857397.8
(22) Date of filing: 28.09.2017
(51) Int. Cl.: C04B 14/42, C04B 20/10, C04B 28/02, B28B 1/52

(54) **GLASS REINFORCEMENT**
GLASVERSTÄRKUNG
RENFORT EN VERRE

(30) Priority: 29.09.2016 US 201662401528 P
(43) Date of publication of application: 07.08.2019
(73) Proprietor: Saint-Gobain ADFORS Canada, Ltd., Grand Island, NY 14072 (US)
(72) Inventor: LI, Zhenpeng, Pitney Flats, Tennessee 37686 (US); BROWN, Nancy E., New Braintree Massachusetts 01531 (US)
(74) Representative: Zimmermann & Partner Patentanwälte mbB
(86) International application number: PCT/US2017/053931
(87) International publication number: WO 2018/064289

(56) References cited:
- WO-A2-97/13815
- WO-A2-97/13815
- WO-A2-2012/078366
- CA-A- 387 549
- US-A- 5 804 313
- US-A- 5 855 663
- US-A- 6 054 205
- US-A1- 2014 087 612

## Description

### TECHNICAL FIELD

The present disclosure relates to a glass reinforcement and a method for making a glass reinforcement.

### BACKGROUND ART

Cementitious boards useful in the construction industry are known to contain inorganic, hydraulically setting material, such as a modified cement or gypsum. Hydraulic gypsum and cement, once set, have very little tensile strength and are usually reinforced with facing materials which improve the resistance to tensile and flexural loads. This has been the basis for using paper facing on conventional gypsum wall board and non-woven glass fiber scrim in cement boards.

Glass fiber meshes have been popular as a facing sheet in cement boards because they can increase the dimensional stability in the presence of moisture and provide greater physical and mechanical properties. However, most glass fiber compositions, other than AR glass, degrade in the alkali environment of a cement core, so they are typically coated with a protective finish.

Current glass scrim reinforcements typically include a coating of PVC plastisol, a blend of PVC particles dispersed in plasticizer (usually phthalate based). Typically, such coatings contain heat stabilizers and varsol (or other paraffin oil based solvent) to control viscosity. Despite the presence of the heat stabilizer, it is not advisable to dry PVC at too high a temperature or it will de-polymerize. The solvent used to control viscosity also tends to evaporate during drawings and yields voids in the coating, leading to decreased alkali resistance in certain locations such that an alkaline environment will attack uncoated glass fiber surfaces. US 2014/087612 A1 is concerned with a reinforced cementitious board comprising: (i) a matrix material comprising a cementitious material having opposed generally planar surfaces and opposed edges; and (ii) at least one scrim disposed on top of at least one of the opposed generally planar surfaces or within the matrix material.

As such, an improved reinforcing fabric for cementitious boards is desired.

### SUMMARY OF THE INVENTION

In an embodiment, the present invention is directed to a glass reinforcement for a cementitious board as defined in claim 1. The glass reinforcement includes at least one glass fiber and a coating on the at least one glass fiber, the coating comprising a polymer composition and an alkali scavenger, wherein the alkali scavenger comprises an acid having a pKa of greater than 3, wherein the acid is in a liquid state at 25°C.

In another embodiment, a reinforcing cementitious board is provided as defined in claim 8. The reinforcing cementitious board includes (a) a cementitious core; and (b) a glass reinforcement disposed on at least one face of the cementitious core. The glass reinforcement includes at least one glass fiber and a coating on the at least one glass fiber, the coating including a polymer composition and an alkali scavenger, wherein the alkali scavenger includes an acid having a pKa of greater than 3, wherein the acid is in a liquid state at 25°C.

In yet another embodiment, a method of making a cementitious board is provided as defined in claim 14. The method includes (a) providing a glass reinforcement including at least one glass fiber and a coating on the at least one glass fiber, the coating including a polymer composition and an alkali scavenger, wherein the alkali scavenger includes an acid having a pKa of greater than 3, wherein the acid is in a liquid state at 25°C. The method further includes (b) depositing a cementitious slurry on the glass reinforcement; and (c) forming the cementitious slurry and the glass reinforcement into the cementitious board.

### BRIEF DESCRIPTION OF THE DRAWINGS

The present disclosure may be better understood, and its numerous features and advantages made apparent to those skilled in the art by referencing the accompanying drawings.
FIG. 1 includes a side cross-sectional view of an exemplary cementitious board showing an embedded glass reinforcement.
FIG. 2 includes a graphical depiction of viscosity of a plastisol coating and an exemplary alkali resistant coating after mixing.
FIG. 3 includes a graphical depiction of viscosity of a plastisol coating and an exemplary alkali resistant coating after 1 month.
FIG. 4 includes a graphical depiction of a strength of a yarn with a plastisol coating and an exemplary alkali resistant coating.
FIGs. 5 and 6 include a graphical depiction of a strength of a yarn with a plastisol coating and an exemplary alkali resistant coating after an aging test.
FIG. 7 includes a graphical depiction of a strength of a yarn having a plastisol coating and an exemplary alkali resistant coating at varying concentrations after an aging test.
FIG. 8 is a graphical depiction of a strength of a scrim with a plastisol coating with and without an exemplary alkali resistant coating after an aging test.
FIGs. 9 and 10 include a graphical depiction of a strength of a scrim having a plastisol coating and an exemplary alkali resistant coating after an aging test.

The use of the same reference symbols in different drawings indicates similar or identical items.

### DETAILED DESCRIPTION OF THE PREFERRED EMBODIMENT(S)

The following description in combination with the figures is provided to assist in understanding the teachings disclosed herein. The following discussion will focus on specific implementations and embodiments of the teachings. This focus is provided to assist in describing the teachings and should not be interpreted as a limitation on the scope or applicability of the teachings. However, other teachings can certainly be used in this application.

Before addressing details of the embodiments described below, some terms are defined or clarified. The term "filament" is intended to mean an elongated structure or fiber of any suitable length. The term "scrim" is intended to mean a woven or nonwoven fabric that includes at least two filaments oriented in two different directions, including but not limited to a mesh. The term "laid scrim" is intended to mean a scrim in which at least one filament overlies at least one other filament to create the scrim. The term "mat" is intended to mean a woven or nonwoven fabric that includes any suitable arrangement of filaments other than an arrangement of filaments in a scrim, including an arrangement of randomly oriented filaments. Unless indicated otherwise, all measurements are at room temperature, i.e. 25°C. For instance, values for viscosity are at about 25°C, unless indicated otherwise.

Unless otherwise defined, all technical and scientific terms used herein have the same meaning as commonly understood by one of ordinary skill in the art to which this invention belongs. The materials, methods, and examples are illustrative only and not intended to be limiting. To the extent not described herein, many details regarding specific materials and processing acts are conventional and may be found in reference books and other sources within the structural arts and corresponding manufacturing arts.

In an embodiment, the present invention provides a glass reinforcement. The glass reinforcement includes at least one glass fiber and a coating on the at least one glass fiber. The coating includes a polymer composition and an alkali scavenger to provide an alkali resistant coating that increases the alkali resistance of the glass reinforcement when exposed to an alkaline environment. For instance, the alkaline environment is a cementitious environment. In an embodiment, the glass reinforcement may be used for any product desired. In a particular embodiment, the glass reinforcement may be used for a cementitious board. The coating in combination with the glass fiber provides a glass reinforcement with desirable physical properties.

The alkali scavenger included within the coating provides resistance to an alkali environment without degradation of the glass fiber. An exemplary alkali scavenger is an acid which is a "weak acid", i.e. with a pKa of greater than 3, such as greater than 5, such as greater than 10, greater than 15, or even greater than 20. In an embodiment, the acid includes an organic acid, an inorganic acid, an ion exchange resin, or combination thereof. Further, the acid is in a liquid state at room temperature 25°C), improving the dispersion of the acid within the coating. The physical state of the acid is an indication of crystallinity of the acid. The liquid state of the acid indicates a 0% crystallinity, wherein a solid state of the acid would indicate a crystalline material. Further, the acid typically has an advantageous boiling point. For instance, the boiling point of the acid is greater than about 250°C, such as greater than about 300°C, such as greater than about 350°C. Although not being bound by theory, the boiling point of the acid provides particular advantages, such as improved alkali resistance and less malodor than an acid with a boiling point lower than 250°C. In an embodiment, the acid includes an organic acid, an inorganic acid, an ion exchange resin, or combination thereof. In a particular embodiment, the acid includes at least 10 carbon groups and optionally, at least one ethylenic bond. In a more particular embodiment, the acid includes hexanoic acid, octanoic acid, oleic acid, or combination thereof. In an embodiment, the alkali scavenger consists essentially of an organic acid. In a particular embodiment, the alkali scavenger consists of an organic acid. In an embodiment, the organic acid consists essentially of hexanoic acid, octanoic acid, oleic acid, or combination thereof. In a particular embodiment, the organic acid consists of hexanoic acid, octanoic acid, oleic acid, or combination thereof.

In an embodiment, the alkali scavenger is an organic acid that is liquid at room temperature and has a boiling point greater than 250°C. In particular, the alkali scavenger is soluble and dispersible within the coating. Advantageously, the liquid alkali scavenger does not settle but rather, remains as a stable, homogenous dispersion within the coating, even after 28 days. Further, the alkali scavenger does not chemically react with the coating components, as evidenced by the stabilized viscosity when the alkali scavenger is present in the coating. Advantageous, when present within the coating with a polymer, such as a polyvinyl chloride, the liquid alkali scavenger further is miscible with the polymer. "Miscible" as used herein provides a final coating, when cured, that does not have microscopic defects at the interface of the alkali scavenger and the polymer, such as a polyvinyl chloride. In contrast, a solid alkali scavenger is immiscible, i.e. a final coating, when cured, has microscopic defects at the interface of the alkali scavenger and the polymer, such as a polyvinyl chloride, resulting in a reduced alkali resistance.

The alkali scavenger is present within the coating at 0.5% by weight to 20.0% by weight, such as about 0.5% by weight to about 10.0% by weight, such as about 1.0% by weight to about 10.0% by weight, such as about 1.0% by weight to about 7.0% by weight, such as about 1.0% by weight to about 6.0% by weight, such as about 1.0% by weight to about 5.0% by weight of the total weight of the coating. It will be appreciated that the amount of alkali scavenger can be within a range between any of the minimum and maximum values noted above. In a particular embodiment, the alkali scavenger can be present in an amount such as not to adversely impact the viscosity of the coating. For instance, the inclusion of the alkali scavenger does not substantially change the original viscosity of the coating. In particular, the viscosity of the coating is changed by not more than 10% prior to cure, such as not more than 8% prior to cure, such as not more than 6% prior to cure, such as not more than 4% prior to cure, compared to a coating without an alkali scavenger. In an embodiment, the inclusion of the alkali scavenger does not adversely impact the cure temperature of the coating compared to a coating without an alkali scavenger. For instance, the cure temperature of the coating does not change by more than 5%, compared to a coating without an alkali scavenger.

The polymer composition includes polyvinyl chloride (PVC), polyethylene, polypropylene, polyamide, or any combination of these polymers. In a particular embodiment, the polymer composition is plastisol, the plastisol including a dispersion of PVC, a plasticizer, and optionally, one or more additives. In a more particular embodiment, the polyvinyl chloride is a flexible polyvinyl chloride. Any reasonable plasticizer is envisioned and includes, for example, a phthalate. In an embodiment, the phthalate is diisononyl phthalate, dioctyl terephthalate, or combination thereof. In a particular embodiment, the polymer composition includes a vinyl chloride copolymer, diisonoyl phthalate, dioctyl terephthalate, or combination thereof. In a further embodiment, the polymer composition consists essentially of a vinyl chloride copolymer, diisonoyl phthalate, dioctyl terephthalate, or combination thereof. In a more particular embodiment, the polymer composition consists of a vinyl chloride copolymer, diisonoyl phthalate, dioctyl terephthalate, or combination thereof.

Additionally, the coating can be provided with any reasonable additive. Exemplary additives include a viscosity modifier, an additive for improved heat resistance, a defoamer, a re-wetting agent, a mold inhibitor, a fire retardant, a coloring agent, the like, or combination thereof. Any reasonable amount of additive is envisioned. In an embodiment, the additive to the coating can promote greater affinity to set gypsum, or to modified cement-based mortars, for example. In an embodiment, the polymer is provided within a solvent. Any reasonable solvent is envisioned, such as paraffin oil based solvent, an alcohol ethoxylate, or combination thereof. In an embodiment, the coating includes about 40 weight % to about 60 weight % polyvinyl chloride resin, about 25 weight% to about 40 weight % plasticizer, and about 2 weight % to about 10 weight % additives.

In a particular embodiment, the coating may be coated on individual strands of fiber, filaments, or yarn. In an embodiment, the coating coats the front surface, the back surface, or combination thereof of the glass reinforcement. In an embodiment, the coating coats a combination of both the front surface and the back surface of the glass reinforcement. In a particular embodiment, the glass fiber is coated with the coating without any exposed surface of the glass fiber. In a more particular embodiment, the coating provides a homogenous, continuous coating on the glass fiber without any exposed surface of the glass fiber. For instance, the coating substantially coats the glass fibers at any reasonable thickness. In a particular embodiment, the coating substantially coats the glass fibers at a thickness of greater than about 50 µm, such as about 50 µm to about 100µm. It will be appreciated that the thickness of the coating can be within a range between any of the minimum and maximum values noted above.

The glass fiber may be in the form of a fiber, a yarn, chopped fibers, the like, or combinations thereof. Typically, the glass fiber includes E-glass, AR-glass, C-glass, ECR-glass, R-glass, S-glass, or combination thereof. The term "fiber" as used herein refers to filamentary materials. Often, "fiber" is used synonymously with "filament". The term "filament" is intended to mean an elongated structure or fiber of any suitable length. It is generally accepted that a filament routinely has a finite length that is at least 100 times its diameter. In most cases, it is prepared by drawing a glass fiber from a molten bath, spinning, or by deposition on a substrate. In a particular embodiment, the fibers are assembled into a yarn which may be generally described as an assemblage of filaments, fibers, or strands, either natural or manufactured, to form a continuous length that is suitable for use in weaving or interweaving into textile materials. In another embodiment, the fibers are provided at any length envisioned suitable for use in a non-woven configuration. Further, the fibers may or may not include a sizing composition. In an embodiment, the sizing composition is present to adhere the assemblage of filaments to create a bond between the glass fiber and the coating. Any sizing is envisioned and includes, for example, starch, a silane, an epoxy, or combination thereof.

Any assembly of the glass fiber into a glass reinforcement is envisioned. In an embodiment, the glass fiber may be formed into the glass reinforcement in the form of a scrim, a woven mat, a non-woven mat, a braided fabric, a knitted fabric, a chopped strand, or combination thereof. A "chopped strand" typically describes randomly oriented chopped filaments or fibers, wherein the chopped filaments or fibers are randomly oriented individually or in a group. In an embodiment, a "non-woven mat" may have filaments, fibers, or swirled continuous filament that are randomly-oriented or oriented in a specified configuration. A "knitted fabric" typically includes fabrics produced by interloping chains of filaments, roving, or yarn. In a particular embodiment, the glass reinforcement is in the form of a scrim. The term "scrim" is intended to mean a woven or nonwoven fabric that includes at least two filaments oriented in two different directions, including but not limited to a mesh. A scrim may also be known as a "laid-scrim" and describes a fabric that is non-woven with warp yarns and weft yarns. The term "laid scrim" is intended to mean a scrim in which at least one filament overlies at least one other filament to create the scrim. The term "mat" is intended to mean a woven or nonwoven fabric that includes any suitable arrangement of filaments other than an arrangement of filaments in a scrim, including an arrangement of randomly oriented filaments. A "woven mat" describes a fabric have warp yarns and weft yarns that are intertwined at an intersection point. The warp yarns refer to yarns, fibers, or roving running lengthwise in long lengths and approximately parallel. The weft yarns refer to the threads that transverse the warp yarns. In a particular embodiment, the weft yarns run perpendicular to the warp and are also called fill, filling, yarn or woof. Although warp yarns and weft yarns are described, any angle of the yarn is envisioned.

Although primarily described as glass fibers, other fibers may be envisioned. In an embodiment, the glass reinforcement includes at least one polymeric fiber, at least one basalt fiber, or combination thereof. In an embodiment, the polymeric fiber includes at least one yarn of a polyvinyl alcohol, at least one yarn of polyethylene, at least one yarn of polyester, or combination thereof.

The fibers may be converted to a glass reinforcement, such as a fabric form, by a conventional weaving operation, such as a loom, or a non-weaving operation. Any other construction can also be envisioned for the glass reinforcement. In an embodiment, constructions include stitchbonding or warp knitting. Any conventional means include plain weaving, twill or satin weaving, unidirectional weaving, knitting or stitchbonding. In an embodiment, fine-fiber strands of yarn from the forming operation can be air dried on forming tubes to provide sufficient integrity to undergo a twisting operation. Twist provides additional integrity to yarn before it is subjected to the weaving process. Any twist is envisioned. A typical twist includes up to 0.7 turns/2.54 cm (inch) to about 1.0 turns/2.54 cm (inch) In many instances, heavier yarns may be used for the weaving operation. This is normally accomplished by twisting together two or more single strands, followed by a plying operation. Plying typically includes retwisting the twisted strands in the opposite direction from the original twist. Any type of twist is envisioned. The two types of twist normally used are known as S and Z, which indicate the direction in which the twisting is done. Typically, two or more strands twisted together with an S twist are plied with a Z twist in order to give a balanced yarn. Thus, the yarn properties, such as strength, bundle diameter, and yield, can be manipulated by the twisting and plying operations. Zero twist-yarns may also be used. This input can offer the ease of spreading of (twistless) roving with the coverage of fine-filament yarns.

The major characteristics of the knit or woven embodiments of this invention include its style or weave pattern, fabric count, and the construction of warp yarn and weft yarn. As used herein, "fabric count" identifies the number of warp and weft yarns per inch. In combination, these major characteristics contribute to the glass reinforcement properties such as drapability and performance of the final cementitious board.

Prior to coating, the glass reinforcement has a desirable areal weight. For instance, the areal weight is about 15 grams/m² to about 300 grams/m², such as about 30 grams/m² to about 150 grams/m². In an embodiment, the glass reinforcement has a thickness of about 0.127 mm to 0.559 mm (5 mils to about 22 mils), such as 0.254 mm to 0.381 mm (about 10 mils to about 15 mils) prior to coating. The linear density of fibers of the glass reinforcement is typically about 33 tex to about 136 tex where yarns are employed, to about 2,500 tex where rovings are employed. In an embodiment, the glass reinforcement may also possess an ASTM D5034 tensile strength of at least 12.3 kN/m (about 70 pounds per inch (lbs/in)), such as at least 14.9 kN/m to 16.6 kN/m (about 85 pounds per inch to about 95 pounds per inch), such as at least about 17.5 kN/m to 22.8 kN/m (100 pounds per inch to about 130 pounds per inch), or even greater in the machine direction and in the cross-machine direction. It will be appreciated that the areal weight, thickness, linear density, and tensile strength can be within a range between any of the minimum and maximum values noted above.

The coating can be applied to the glass fibers by any reasonable method. The glass fibers may be coated with the coating before forming the glass reinforcement (i.e. by coating the alkali-resistant film, filament, or yarn), in-line concurrently with formation of the glass reinforcement, or off-line coating after formation of the glass reinforcement. In an embodiment, the coating can be applied in at least one layer or at least one pass. The number of layers or passes of the coating typically depends on the material chosen for the glass reinforcement as well as its construction. The number of applications of the coating may be dependent upon the desired amount of coating to provide the glass reinforcement. Furthermore, the number of applications of the coating may be dependent on the desired porosity for the final glass reinforcement. Typically, a high porosity may be desired to aid in the embedding of the glass reinforcement in the cementitious board. Subsequent layers of the coating to reduce porosity may not be necessary except in the case where a very smooth surface of the cementitious board is desired. "Porosity" as used herein may be dependent upon the intersections of the yarns to allow for openings between the spacing of the yarns as well as dependent on the amount of coating applied on the yarns. For instance, less spacing between the yarns provides lower porosity compared to greater spacing between the yarns. After application, the coating on the at least glass fiber is typically cured. Any reasonable cure temperature is envisioned. Cure temperature is typically dependent upon the composition of the coating.

In an embodiment, the glass reinforcement may have an optional secondary coating to impart further properties to the glass reinforcement. In a particular embodiment, the optional secondary coating may provide, for example, reduced porosity, increased adhesion to the cementitious material, resistance to slurry penetration, reduced corrosion, improved strength or fire resistance, reduced water resistance, reduced "fuzziness" of the surface, or any combination thereof. The optional secondary coating is distinguished from the alkali resistant coating. Any reasonable composition for the optional secondary coating is envisioned. In an embodiment, the optional secondary coating may be a resinous mixture containing one or more resins. For instance, the resin may be a thermoplastic resin or a thermoset resin. In a particular embodiment, the optional secondary coating may include a UV stabilizer, a mold retardant, an additional alkali-resistant formulation, a water repellant, a flame retardant, a dispersant, a catalyst, a filler, the like, and combinations thereof. The optional secondary coating can be applied to the glass reinforcement before and/or after joining the glass reinforcement to the cementitious core.

In an embodiment, the glass reinforcement is a facing material which may be embedded within a cementitious layer as to present a fibrous surface embedded totally, or only partially, on at least one face of a cementitious board. For example, at least a portion of the glass reinforcement can be embedded to between 0.254 mm and 6.35 mm (about 0.01 inches and about 0.25 inches) from a surface or edge of the cementitious product. "Partially embedded," as used herein, refers to a depth within the cementitious product of at least 0.254 mm (about 0.01 inches). In a particular embodiment, the glass reinforcement can be substantially embedded. "Substantially embedded," as used herein, refers to a depth within the cementitious product of at least 1.27 mm (about 0.05 inches). For example, the glass reinforcement can be partially or substantially embedded in a cementitious slurry or mixture that is thereafter dried, hardened, or otherwise cured to provide a cementitious product with the glass reinforcement partially or substantially embedded to a suitable depth from a surface or edge of the cementitious product.

Any cementitious material is envisioned for the cementitious layer. The cementitious layer typically includes a cementitious matrix material, such as cement paste, mortar or concrete, and/or other types of materials such as gypsum, geopolymers (inorganic resins), and geotextiles. In an embodiment, the cementitious material includes gypsum. If gypsum is used, the material may be formed by mixing water with powdered anhydrous calcium sulfate or calcium sulfate hemihydrate (CaSO₄·1/2H₂O), also known as calcined gypsum, to form a slurry and thereafter allowing the slurry to set into calcium sulfate dihydrate (CaSO₄·2H₂O), a relatively hard material. The cementitious material of the cementitious board will in general include at least about 85 weight % set gypsum or cement, based on the total weight % of the cementitious material.

In an embodiment, the cementitious material further includes at least one additive that improves the performance of the resulting cementitious board. Additives include chopped fibers dispersed throughout the cement. In an embodiment, the chopped fibers are AR-glass fiber but may also include, for example, other types of glass fiber, aramid, polyolefin, carbon, graphite, polyester, PVA, polypropylene, natural fiber, cellulosic fiber, rayon, straw, paper, hybrid, or combination thereof. The cementitious material may include at least one other ingredient or additive such as, for example, fly ash, latex, slag and metalcaolin, a resin, such as acrylic, polyvinyl acetate, or the like, ceramic, including silicon oxide, titanium oxide, and silicon nitrite, a setting accelerator, water and/or a fire resistant additive, such as siloxane, borax, a filler, a setting retardant, a dispersing agent, a dye and a colorant, a light stabilizer and a heat stabilizer, a shrinkage reducing admixture, an air entraining agent, a setting accelerator, a defoaming agent, or combination thereof. In an embodiment, the cementitious material may contain a curing agent. In an embodiment, a material that improves the water-resistant properties of the cementitious product is also included.

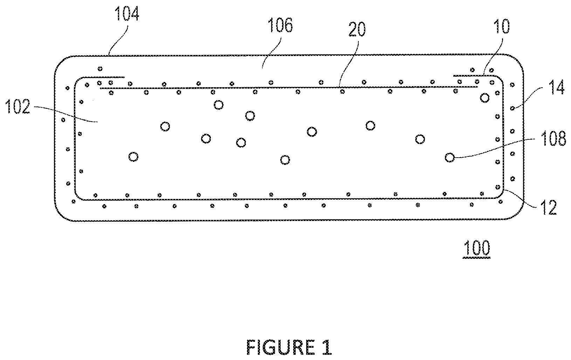

As seen in FIG. 1, a cementitious board 100 is provided, including a cementitious core 102, a glass reinforcement 10, and a separate glass reinforcement 20. The surface 104 of the cementitious core 102 is faced with one or more layers of the glass reinforcement 10 and separate glass reinforcement 20. Any number of layers of glass reinforcement 10 and separate glass reinforcement 20 is envisioned. Although not illustrated, a single glass reinforcement 10 may be used that reinforces an entire perimeter of the cementitious board 100.

In the illustrated embodiment, the glass reinforcement 10 includes warp yarns 12 and weft yarns 14 in a laid scrim with the glass fibers of warp yarns 12 and weft yarns 14 having the coating containing the alkali scavenger. The glass reinforcement 10 and separate glass reinforcement 20 may be the same or a different material. In a particular embodiment, the glass reinforcement 10 and the separate glass reinforcement 20 are the same material. In an embodiment, a thin cementitious layer 106 is on the surface 104 of the cementitious board 100. The cementitious core 102 can further include any performance additive 108 which can be added to the slurry precursor of the cementitious core 102.

Any method of manufacturing the cementitious board 100 is envisioned, including molding, extrusion, and semi-continuous processes. Typically, the cementitious board 100 can be made by forming an aqueous cementitious slurry which contains excess water and placing the cementitious slurry on the facing material, such as glass reinforcement 10. In an embodiment, the alkali scavenger forms a soapy layer when the cementitious slurry contacts the glass reinforcement 10. The glass reinforcement 10 may be folded around the perimeter of the cementitious board 100 before final setting of the cementitious core 102. Folding can be accomplished by any reasonable method such as a combination of guide flanges and rollers which embed the glass reinforcement 10 within the board 100. Furthermore, the separate glass reinforcement 20 may be disposed within the aqueous cementitious slurry before final setting of the cementitious core 102. Aided by heating, excess water evaporates through the glass reinforcement 10 and separate glass reinforcement 20 as the slurry sets to provide a set cement. In an embodiment, heating may be at any reasonable temperature to evaporate the water contained within the slurry. For instance, the heating may occur at temperatures of about 138 °C (280°F) to about 177°C (350°F)

. The dwell time the material is exposed to at those temperatures typically varies, depending on the machine used. In an example, the dwell time is about 30 seconds to about 120 seconds. In an embodiment, the glass reinforcement 10 and separate glass reinforcement 20 should be at least be sufficiently porous to permit water in the aqueous slurry from which the core is made to evaporate therethrough, and may be porous enough to permit the slurry to pass through and form a continuous or discontinuous film.

The glass reinforcement provides a product with advantageous properties such as desirable alkali resistance, tensile strength, and modulus of rupture. In an embodiment, the coated glass fiber has an initial strength that does not increase or decrease by more than 10%, compared to a coated glass fiber with an alkali scavenger. For instance, the strength of the coated glass fiber with an alkali scavenger is greater than a coated glass fiber without an alkali scavenger after 3 days in a trialkali bath at 80°C. Additionally, the strength of the coated glass fiber with an alkali scavenger is greater than a coated glass fiber without an alkali scavenger after 28 days in a trialkali bath at 25°C. In an embodiment, the glass reinforcement provides a cementitious board with a desirable tensile strength. For instance, the glass reinforcement provides a cementitious board with a tensile strength of at least about 525 N, such as least about 550 N, such as at least about 575 N, or even greater than 600 N. In an embodiment, the modulus of rupture is at least 4.1 MPa (about 600 psi), such as at least 4.5 MPa (about 650 psi), such as at least 4.8 MPa (about 700 psi). Further, the glass reinforcement has a Gurley Stiffness measurement such that the glass reinforcement is sufficiently drapable and lacking in shape memory so as to be curved around the edge of a product to be reinforced, such as a gypsum board or a cement board, during manufacture of the same.

Applications for the glass reinforcement are numerous. The glass reinforcement can be employed in many end-use reinforcement applications, such as, for example, gypsum and cement boards, asphalt and road reinforcement, roofing applications, soil reinforcement, polymer-matrix reinforcement, and as stand-alone coated fabrics in filters, screens and garment applications.

In a particular embodiment, the glass reinforcement and cementitious board of this invention are useful in all sorts of building construction applications. They are strong, having a screw strength of at least about 20 lbs., for gypsum cores of conventional densities and compositions. Some examples include shaft wall assemblies for elevators and stairways, fire doors and fire walls, roofing and siding substrates, with or without insulation, exterior stucco systems, and tile backer boards. Some of the most desirable and useful applications for this invention are in EIF systems (also called EIFS, for Exterior Insulation Finishing Systems), or as tile backer boards.

Many different aspects and embodiments are possible. Some of those aspects and embodiments are described herein. After reading this specification, skilled artisans will appreciate that those aspects and embodiments are only illustrative and do not limit the scope of the present invention.

The following example is provided to better disclose and teach processes and compositions of the present invention. It is for illustrative purposes only, and it must be acknowledged that minor variations and changes can be made without materially affecting the scope of the invention as recited in the claims that follow.

### EXAMPLES

### Example 1

An E-glass fiber has a starch based sizing and 68tex size. The scavenger of hexanoic acid or oleic acid is added an amount of about 2.0 wt% based on the total weight of the coating is mixed into plastisol (obtained from Sigma-Aldrich). The scavengers have good solubility in plastisol and good coating on the glass fiber. Coating is at a DPU (wherein DPU = coating weight / glass weight) of 1.34.

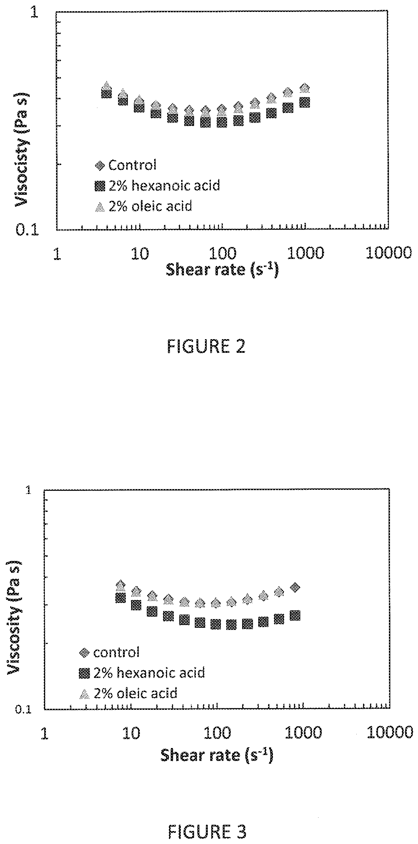

As seen in FIGs. 2 and 3, the addition of either the hexanoic acid or oleic acid did not substantially impact the viscosity of plastisol after immediate mixing and after aging for 1 month. "Control" is a plastisol without any alkali scavenger. Viscosity is measured by rotational rheometer.

Viscosity data can also be seen in Table 1 of an alkali scavenger of oleic acid at 2 wt% in plastisol after 2, 7, and 28 storage days. Viscosity is measured by rotational rheometer.

**Table 1**

| | | | |
|---|---|---|---|
| Storage days | 2 | 7 | 28 |
| Viscosity @10 ¹/s (cp) | 467 | 482 | 489 |

Viscosity data after 28 days demonstrates that a reaction does not occur between the alkali scavenger and the components of the PVC plastisol formulation.

Further, the addition of the alkali scavenger does not substantially impact the curing temperature of the coating. Results can be seen in Table 2.

**Table 2**

| Sample | Gel Temperature (°C) | Curing Temperature (°C) |
|---|---|---|
| Control | 69.2 | 180.8 |
| Control aged for 1 month | 74.6 | 177.5 |
| Hexanoic acid | 67.8 | 178.2 |
| Hexanoic acid aged for 1 month | 72.2 | 180.1 |

Alkali permeability is tested by permeation test method used in ASTM EN374. Results can be seen in Table 3.

**Table 3**

| Samples | Alkali permeability at room temperature (mol·m/day·m²) |
|---|---|
| Control | 8.02 × 10⁻¹⁰ |
| 2% hexanoic acid | 7.41 × 10⁻¹¹ |
| 2% oleic acid | 1.98 x 10⁻¹⁰ |

As seen in Table 3, the addition of the weak acid provides decreased alkali permeability compared to the Control.

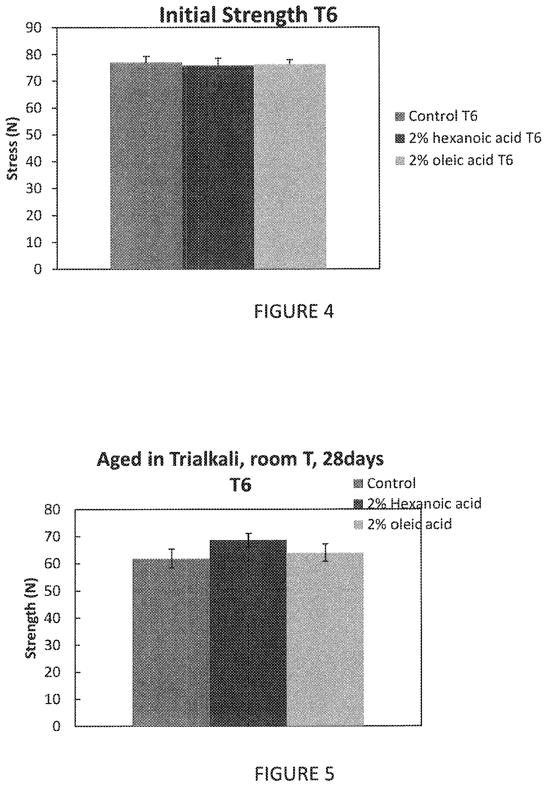

The strength of the yarn coated with plastisol with and without an alkali scavenger is measured by Instron tensile testing with ASTM D2256 testing method. As seen in FIG. 4, the addition of the weak acid does not substantially impact the strength of the yarn compared to plastisol without any alkali scavenger (i.e. Control T6).

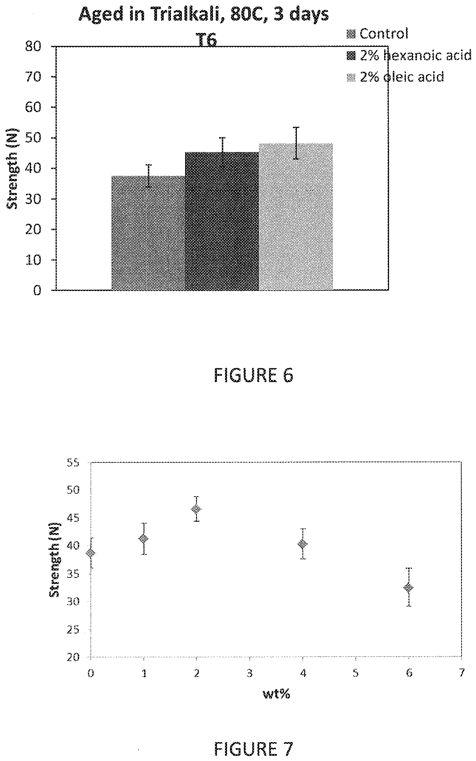

An aging test is conducted on the yarn in a trialkali solution, where the trialkali solution equals 4g/L KOH + Ig/L NaOH +0.5g/L Ca(OH)₂ in deionized water. Results of the strength of the yarn can be seen in FIGs. 5 and 6 for aging at room temperature for 28 days and at 80°C for 3 day, respectively. Clearly, the addition of the weak acids improves the alkali resistance of the glass fiber compared to the Control.

The strength of the yarn coated with plastisol with an alkali scavenger of oleic acid at varying levels is measured by Instron tensile testing with ASTM D2256 testing method. FIG. 7 shows the aging in the trialkali solution at 80°C for 3 days. As seen in FIG. 7, levels of oleic acid below 6 wt% advantageously increases the strength of the yarn. Unexpectedly, it was discovered that at levels above 6wt%, the strength of the yarn decreases and is worse than the strength of the yarn without any alkali scavenger, showing a deleterious impact of the alkali scavenger on the strength of the yarn with the greater amount of alkali scavenger.

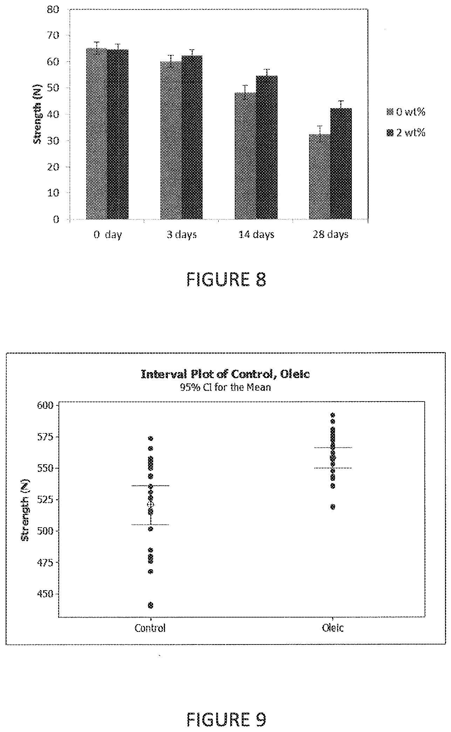

FIG. 8 shows the results of aging at room temperature for 28 days of a yarn coated with plastisol with an alkali scavenger of oleic acid at 2 wt% and a yarn coated with plastisol without an alkali scavenger. As seen in FIG. 8, the addition of 2 wt% oleic acid has a better strength over time compared to a yarn coated with plastisol without any alkali scavenger.

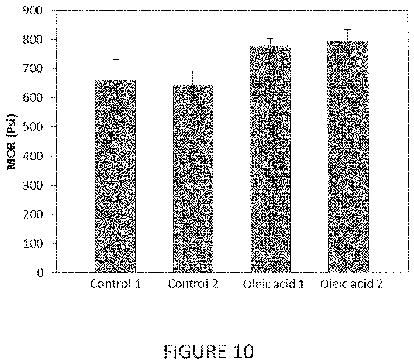

A scrim aging test is performed. An oleic acid is used as the alkali scavenger compared to a plastisol solution without an alkali scavenger. The coating compositions are placed on a scrim. Scrims include E-glass yarns coated with plastisol with and without the alkali scavenger, construction has 8 yarns per inch in machine direction and 7.5 yarns/inch in cross direction. FIG. 9 shows the results of the strength of the scrim after 3 days in hot trialkali. FIG. 10 shows the results of the strength of the scrim after 3 days in a hot water bath. Scrims are embedded in cement to make a standard cement board. Then the cement boards are soaked in hot water at 80°C for 3 days for aging. Aging test shows an improvement with the weak acid alkali scavengers compared to the Control. Control 1 and 2 are two cement boards made from two different batches using the plastisol without an alkali scavenger. Oleic 1 and Oleic 2 are results for two cement boards from two different batches of plastisol with an oleic acid alkali scavenger at 2% based on the total weight of the coating.

Certain features, for clarity, described herein in the context of separate embodiments, may also be provided in combination in a single embodiment. Conversely, various features that are, for brevity, described in the context of a single embodiment, may also be provided separately or in any subcombination. Further, reference to values stated in ranges includes each and every value within that range.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims.

## Claims

1. A glass reinforcement for a cementitious board comprising at least one glass fiber and a coating on the at least one glass fiber, the coating comprising a polymer composition and an alkali scavenger, wherein the polymer composition comprises polyvinyl chloride, polyethylene, polypropylene, polyamide, or combination thereof, wherein the alkali scavenger is present at 0.5% by weight to 20.0% by weight of the total weight of the coating and wherein the alkali scavenger comprises an acid having a pKa of greater than 3, wherein the acid is in a liquid state at 25°C.

2. The glass reinforcement of claim 1, wherein the acid comprises an organic acid, an inorganic acid, an ion exchange resin, or combination thereof.

3. The glass reinforcement of claim 1, wherein the acid has a boiling point of greater than 250°C, such as greater than 300°C, such as greater than 350°C.

4. The glass reinforcement of claim 1, wherein the acid comprises at least 10 carbon groups and optionally, at least one ethylenic bond.

5. The glass reinforcement of claim 1, wherein the acid comprises hexanoic acid, octanoic acid, oleic acid, or combination thereof.

6. The glass reinforcement of claim 1, wherein the polymer composition comprises a vinyl chloride copolymer, diisonoyl phthalate, dioctyl terephthalate, or combination thereof.

7. The glass reinforcement of claim 1, wherein the glass reinforcement is disposed at on least one face of a cementitious core.

8. A reinforcing cementitious board comprising:
(a) a cementitious core; and
(b) a glass reinforcement disposed on at least one face of the cementitious core;
the glass reinforcement comprising at least one glass fiber and a coating on the at least one glass fiber, the coating comprising a polymer composition and an alkali scavenger, wherein the polymer composition comprises polyvinyl chloride, polyethylene, polypropylene, polyamide, or combination thereof, wherein the alkali scavenger is present at 0.5% by weight to 20.0% by weight of the total weight of the coating and wherein the alkali scavenger comprises an acid having a pKa of greater than 3, wherein the acid is in a liquid state at 25°C.

9. The reinforcing cementitious board of claim 8, wherein the acid comprises an organic acid, an inorganic acid, an ion exchange resin, or combination thereof.

10. The reinforcing cementitious board of claim 8, wherein the acid has a boiling point of greater than 250°C, such as greater than 300°C, such as greater than 350°C.

11. The reinforcing cementitious board of claim 8, wherein the acid comprises hexanoic acid, octanoic acid, oleic acid, or combination thereof.

12. The reinforcing cementitious board of claim 8, wherein the polymer composition comprises a vinyl chloride copolymer, diisonoyl phthalate, dioctyl terephthalate, or combination thereof.

13. The reinforcing cementitious board of claim 8, wherein the glass reinforcement comprises a scrim, a woven mat, a non-woven mat, a braided fabric, a knitted fabric, a chopped strand, or combination thereof.

14. A method of making a cementitious board comprising:
(a) providing a glass reinforcement comprising at least one glass fiber and a coating on the at least one glass fiber, the coating comprising a polymer composition and an alkali scavenger, wherein the polymer composition comprises polyvinyl chloride, polyethylene, polypropylene, polyamide, or combination thereof, wherein the alkali scavenger is present at 0.5% by weight to 20.0% by weight of the total weight of the coating and_wherein the alkali scavenger comprises an acid having a pKa of greater than 3, wherein the acid is in a liquid state at 25°C;
(b) depositing a cementitious slurry on the glass reinforcement; and
(c) forming the cementitious slurry and the glass reinforcement into the cementitious board.

15. The method of making the cementitious board of claim 14, wherein the coating on the at least one glass fiber is cured.

## Patentansprüche

1. Glasverstärkung für eine zementartige Platte, die mindestens eine Glasfaser und eine Beschichtung auf der mindestens einen Glasfaser umfasst, wobei die Beschichtung eine Polymerzusammensetzung und einen Alkalifänger umfasst, wobei die Polymerzusammensetzung Polyvinylchlorid, Polyethylen, Polypropylen, Polyamid oder eine Kombination davon umfasst, wobei der Alkalifänger mit 0,5 Gew.-% bis 20,0 Gew.-% des Gesamtgewichts der Beschichtung vorliegt und wobei der Alkalifänger eine Säure umfasst, die einen pKa von über 3 aufweist, wobei die Säure bei 25 °C in flüssigem Zustand vorliegt.

2. Glasverstärkung nach Anspruch 1, wobei die Säure eine organische Säure, eine anorganische Säure, ein Ionenaustauscherharz oder eine Kombination davon umfasst.

3. Glasverstärkung nach Anspruch 1, wobei die Säure einen Siedepunkt von über 250 °C wie beispielsweise über 300 °C, wie beispielsweise über 350 °C aufweist.

4. Glasverstärkung nach Anspruch 1, wobei die Säure mindestens 10 Kohlenstoffgruppen und wahlweise mindestens eine ethylenische Bindung umfasst.

5. Glasverstärkung nach Anspruch 1, wobei die Säure Hexansäure, Octansäure, Ölsäure oder eine Kombination davon umfasst.

6. Glasverstärkung nach Anspruch 1, wobei die Polymerzusammensetzung ein Vinylchloridcopolymer, Diisonoylphthalat, Dioctylterephthalat oder eine Kombination davon umfasst.

7. Glasverstärkung nach Anspruch 1, wobei die Glasverstärkung auf mindestens einer Seite eines zementartigen Kerns angeordnet ist.

8. Zementartige Verstärkungsplatte, umfassend:
(a) einen zementartigen Kern; und
(b) eine Glasverstärkung, die auf mindestens einer Seite des Zementkerns angeordnet ist; wobei die Glasverstärkung mindestens eine Glasfaser und eine Beschichtung auf der mindestens einen Glasfaser umfasst, wobei die Beschichtung eine Polymerzusammensetzung und einen Alkalifänger umfasst, wobei die Polymerzusammensetzung Polyvinylchlorid, Polyethylen, Polypropylen, Polyamid oder eine Kombination davon umfasst, wobei der Alkalifänger mit 0,5 Gew.-% bis 20,0 Gew.-% des Gesamtgewichts der Beschichtung vorliegt und wobei der Alkalifänger eine Säure umfasst, die einen pKa von über etwa 3 aufweist, wobei die Säure bei 25 °C in flüssigem Zustand vorliegt.

9. Zementartige Verstärkungsplatte nach Anspruch 8, wobei die Säure eine organische Säure, eine anorganische Säure, ein Ionenaustauscherharz oder eine Kombination davon umfasst.

10. Zementartige Verstärkungsplatte nach Anspruch 8, wobei die Säure einen Siedepunkt von über 250 °C wie beispielsweise über 300 °C, wie beispielsweise über 350 °C aufweist.

11. Zementartige Verstärkungsplatte nach Anspruch 8, wobei die Säure Hexansäure, Octansäure, Ölsäure oder eine Kombination davon umfasst.

12. Zementartige Verstärkungsplatte nach Anspruch 8, wobei die Polymerzusammensetzung ein Vinylchloridcopolymer, Diisonoylphthalat, Dioctylterephthalat oder eine Kombination davon umfasst.

13. Zementartige Verstärkungsplatte nach Anspruch 8, wobei die Glasverstärkung einen Gitterstoff, eine gewebte Matte, eine nicht gewebte Matte, einen geflochtenen Stoff, einen gewirkten Stoff, einen geschnittenen Strang oder eine Kombination davon umfasst.

14. Verfahren zum Herstellen einer zementartigen Verstärkungsplatte, umfassend:
(a) Bereitstellen einer Glasverstärkung, die mindestens eine Glasfaser und eine Beschichtung auf der mindestens einen Glasfaser umfasst, wobei die Beschichtung eine Polymerzusammensetzung und einen Alkalifänger umfasst, wobei die Polymerzusammensetzung Polyvinylchlorid, Polyethylen, Polypropylen, Polyamid oder eine Kombination davon umfasst, wobei der Alkalifänger mit 0,5 Gew.-% bis 20,0 Gew.-% des Gesamtgewichts der Beschichtung vorliegt und wobei der Alkalifänger eine Säure umfasst, die einen pKa von über 3 aufweist, wobei die Säure bei 25 °C in flüssigem Zustand vorliegt;
(b) Abscheiden einer zementartigen Aufschlämmung auf der Glasverstärkung; und
(c) Bilden der zementhaltigen Aufschlämmung und der Glasverstärkung zu der zementartigen Platte.

15. Verfahren zum Herstellen der zementartigen Platte nach Anspruch 14, wobei die Beschichtung auf der mindestens eine Glasfaser gehärtet wird.

## Revendications

1. Renfort en verre pour un panneau en ciment comprenant au moins une fibre de verre et un revêtement sur la au moins une fibre de verre, le revêtement comprenant une composition polymère et un agent d'épuration alcalin, dans lequel la composition polymère comprend du polychlorure de vinyle, du polyéthylène, du polypropylène, du polyamide ou une combinaison de ceux-ci, dans lequel l'agent d'épuration alcalin est présent à raison de 0,5 % en poids à 20,0 % en poids du poids total du revêtement et dans lequel l'agent d'épuration alcalin comprend un acide ayant un pKa supérieur à 3, dans lequel l'acide est à l'état liquide à 25 °C.

2. Renfort en verre selon la revendication 1, dans lequel l'acide comprend un acide organique, un acide inorganique, une résine échangeuse d'ions ou une combinaison de ceux-ci.

3. Renfort en verre selon la revendication 1, dans lequel l'acide a un point d'ébullition supérieur à 250 °C, tel que supérieur à 300 °C, tel que supérieur à 350 °C.

4. Renfort en verre selon la revendication 1, dans lequel l'acide comprend au moins 10 groupes carbonés et éventuellement, au moins une liaison éthylénique.

5. Renfort en verre selon la revendication 1, dans lequel l'acide comprend l'acide hexanoïque, l'acide octanoïque, l'acide oléique ou une combinaison de ceux-ci.

6. Renfort en verre selon la revendication 1, dans lequel la composition polymère comprend un copolymère de chlorure de vinyle, du diisonoyle phtalate, du dioctyle téréphtalate ou une combinaison de ceux-ci.

7. Renfort en verre selon la revendication 1, dans lequel le renfort en verre est disposé sur au moins une face d'un noyau en ciment.

8. Panneau de renforcement en ciment comprenant :
(a) un noyau en ciment ; et
(b) un renfort en verre disposé sur au moins une face du noyau en ciment ; le renfort en verre comprenant au moins une fibre de verre et un revêtement sur la au moins une fibre de verre, le revêtement comprenant une composition polymère et un agent d'épuration alcalin, dans lequel la composition polymère comprend du polychlorure de vinyle, du polyéthylène, du polypropylène, du polyamide ou une combinaison de ceux-ci, dans lequel l'agent d'épuration alcalin est présent à raison de 0,5 % en poids à 20,0 % en poids du poids total du revêtement et dans lequel l'agent d'épuration alcalin comprend un acide ayant un pKa supérieur à 3, dans lequel l'acide est à l'état liquide à 25 °C.

9. Panneau de renforcement en ciment selon la revendication 8, dans lequel l'acide comprend un acide organique, un acide inorganique, une résine échangeuse d'ions ou une combinaison de ceux-ci.

10. Panneau de renforcement en ciment selon la revendication 8, dans lequel l'acide a un point d'ébullition supérieur à 250 °C, tel que supérieur à 300 °C, tel que supérieur à 350 °C.

11. Panneau de renforcement en ciment selon la revendication 8, dans lequel l'acide comprend l'acide hexanoïque, l'acide octanoïque, l'acide oléique ou une combinaison de ceux-ci.

12. Panneau de renforcement en ciment selon la revendication 8, dans lequel la composition polymère comprend un copolymère de chlorure de vinyle, du diisonoyle phtalate, du dioctyle téréphtalate ou une combinaison de ceux-ci.

13. Panneau de renforcement en ciment selon la revendication 8, dans lequel le renfort en verre comprend une toile, un mat tissé, un mat non tissé, un tissu tressé, un tissu tricoté, un fil coupé ou une combinaison de ceux-ci.

14. Procédé de fabrication d'un panneau en ciment, comprenant :
(a) la fourniture d'un renfort en verre comprenant au moins une fibre de verre et un revêtement sur la au moins une fibre de verre, le revêtement comprenant une composition polymère et un agent d'épuration alcalin, dans lequel la composition polymère comprend du polychlorure de vinyle, du polyéthylène, du polypropylène, du polyamide ou une combinaison de ceux-ci, dans lequel l'agent d'épuration alcalin est présent à raison de 0,5 % en poids à 20,0 % en poids du poids total du revêtement et dans lequel l'agent d'épuration alcalin comprend un acide ayant un pKa supérieur à 3, dans lequel l'acide est à l'état liquide à 25 °C ;
(b) le dépôt d'un coulis de ciment sur le renfort de verre ; et
(c) la mise en forme du coulis de ciment et du renfort en verre en le panneau en ciment.

15. Procédé de fabrication du panneau en ciment selon la revendication 14, dans lequel le revêtement sur la au moins une fibre de verre est durci.
